# EUROPÄISCHE PATENTSCHRIFT

(11) **EP 2 419 907 B1**
(45) Veröffentlichungstag und Bekanntmachung des Hinweises auf die Patenterteilung: **20.02.2013**
(21) Anmeldenummer: 10801153.7
(22) Anmeldetag: 15.12.2010
(51) Int. Cl.: G21C 19/02, G21C 19/20, G21F 9/28, G21C 19/00

(54) **VERFAHREN ZUM ZERLEGEN EINES IN EINEM REAKTORDRUCKBEHÄLTER EINES KERNKRAFTWERKES EINGEBAUTEN UNTEREN KERNGERÜSTES**
METHOD FOR DISMANTLING A LOWER CORE SUPPORT STRUCTURE INSTALLED IN A REACTOR PRESSURE VESSEL OF A NUCLEAR POWER PLANT
PROCÉDÉ D'EXTRACTION D'UN COEUR DE RÉACTEUR INFÉRIEUR INCORPORÉ DANS UNE CUVE DE RÉACTEUR D'UNE CENTRALE NUCLÉAIRE

(30) Priorität: 17.12.2009 DE 102009054913
(43) Veröffentlichungstag der Anmeldung: 22.02.2012
(73) Patentinhaber: Areva NP GmbH, 91052 Erlangen (DE)
(72) Erfinder: STROBEL, Reinhardt, 90471 Nürnberg (DE); KESSLER, Johannes, 91096 Möhrendorf (DE); KÄUFL, Theo, 92318 Neumarkt (DE); ARNOLD, Hans-Uwe, 63739 Aschaffenburg (DE)
(74) Vertreter: Mörtel & Höfner
(86) Internationale Anmeldenummer: PCT/EP2010/069773
(87) Internationale Veröffentlichungsnummer: WO 2011/083005

(56) Entgegenhaltungen:
- DE-A1- 19 836 999
- DE-C1- 19 610 102
- US-A- 4 859 409
- US-A- 5 864 594

## Beschreibung

Die Erfindung bezieht sich auf ein Verfahren zum Zerlegen eines in einem Reaktordruckbehälter eines Kernkraftwerkes eingebauten unteren Kerngerüstes.

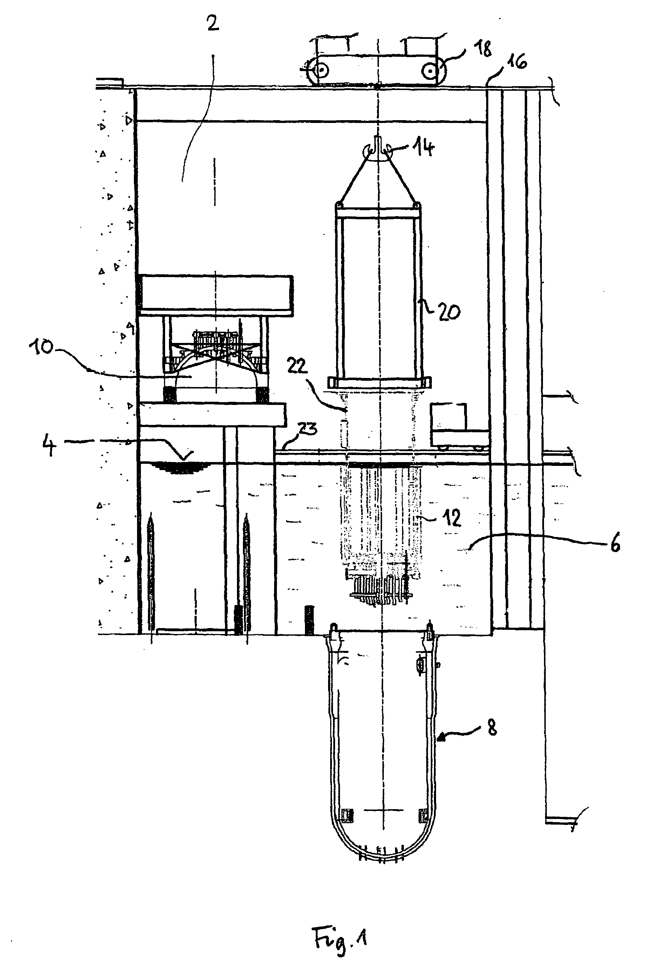

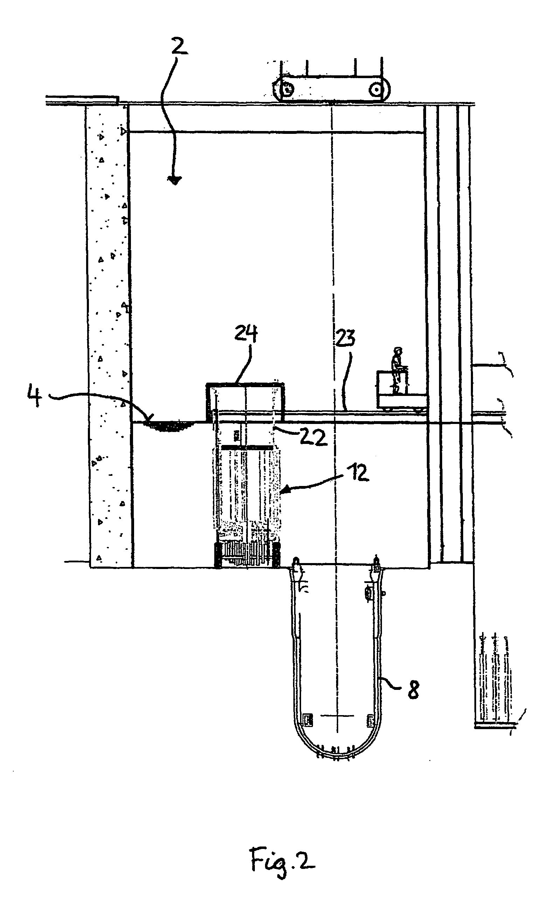

Beim Rückbau eines Kernkraftwerkes müssen die großvolumigen Anlagenkomponenten für den Abtransport zerlegt werden. Aus Platzgründen kann der Zerlegevorgang nicht immer in situ stattfinden. Vielmehr ist es erforderlich, die zu zerlegende Komponente aus einem fest im Kernkraftwerk installierten Anlagenteil zunächst auszubauen und den eigentlichen Zerlegevorgang außerhalb des Anlagenteils vorzunehmen. Dies ist beispielsweise der Fall bei den innerhalb eines Reaktordruckbehälters angeordneten großvolumigen Einbauten. Dabei ist es wünschenswert sowohl den Transport als auch den eigentlichen Zerlegevorgang aus Strahlenschutzgründen unter einer Wasserüberdeckung vorzunehmen. Während beispielsweise nach Entfernen des Reaktordruckbehälterdeckels das obere Kerngerüst aufgrund seiner relativ geringen Bauhöhe stets unter einer ausreichenden Wasserüberdeckung gehandhabt werden kann, ist beim Ausbau des unteren Kerngerüstes aus dem Reaktordruckbehälter aufgrund seiner Bauhöhe und der im Reaktorbecken verfügbaren begrenzten Wassertiefe ein Transport des unteren Kerngerüstes oder, wie dies in der US 4,859,409 für die Durchführung von Wartungs- oder Inspektionsarbeiten vorgeschlagen wird, dessen Absetzen auf eine auf dem Flansch des Reaktordruckbehälters angebrachte Tragstruktur unter vollständiger Wasserüberdeckung oftmals nicht möglich. In einem solchen Fall ist ein sogenanntes Trockenziehen erforderlich, bei dem das untere Kerngerüst so weit angehoben werden muss, dass es mit seinem oberen Teil über die Wasseroberfläche ragt. Dies ist anhand von Fig. 1 und 2 näher erläutert. Gemäß Fig. 1 ist eine Reaktorgrube 2 eines Kernkraftwerkes bis zu einer maximal zulässigen Höhe (Wasserspiegel 4) mit Wasser 6 geflutet. Von einem in der Reaktorgrube 2 befindlichen Reaktordruckbehälter 8 ist der Reaktordruckbehälterdeckel 10 entfernt worden und seitlich oberhalb des Wasserspiegels 4 abgestellt. In Fig. 1 ist eine Situation dargestellt, in der ein unteres Kerngerüst 12 mit Hilfe eines an einem Kranhaken 14 eines entlang einer Brücke 16 verfahrbaren Gebäudekrans 18 aufgehängten Haltewerkzeuges 20 so weit aus dem Reaktordruckbehälter 8 angehoben ist, dass es zur Seite verfahren werden kann und neben dem Reaktordruckbehälter 8 abgestellt werden kann. Der Fig. 1 ist zu entnehmen, dass es hierzu unvermeidlich ist, dass ein Oberteil 22 über den Wasserspiegel 4 hinaus ragt, da die Bauhöhe des unteren Kerngerüstes 12 größer ist als der Abstand zwischen der Oberkante des geöffneten Reaktordruckbehälters 8 und dem Wasserspiegel 4 der bis zu einer begehbaren Arbeitsebene 23 gefluteten Reaktorgrube 2.

Fig. 2 zeigt die Situation, in der das untere Kerngerüst 12 auf einem Boden der Reaktorgrube 2 neben dem Reaktordruckbehälter 8 abgestellt ist, um dort weitere Zerlegearbeiten vornehmen zu können. Auch in diesem Fall überragt das Kerngerüst 12 nach wie vor den Wasserspiegel 4. Aus Strahlenschutzgründen ist deshalb für die Durchführung der weiteren Zerlegearbeiten über das oberhalb des Wasserspiegels 4 befindliche Oberteil eine Abschirmglocke 24 gestülpt.

Nachteilig an diesem sogenannten Trockenziehen des unteren Kerngerüstes ist nun, dass vor dem Transport sowohl aufwendige Dekontaminationsarbeiten als auch beim Transport ebenfalls aufwendige zusätzliche Abschirmmaßnahmen erforderlich sind. Darüber hinaus werden durch die Anbringung einer massiven Abschirmglocke die Zerlegearbeiten am unteren Kerngerüst behindert.

Die Patentschrift DE 196 10 102 C1 offenbart ein weiteres Verfahren zum entsorgen des unteren Kerngerüsts einer Druckwasserreaktoranlage, dessen Bauhöhe größer ist, als der Abstand zwischen Oberkante des geöffneten Reaktordruckbehälters und dem Wasserspiegel einer bis zu einer begehbaren Arbeitsebene gefluteten Reaktorgrube.

Die Patentschrift US 5 864 594 A offenbart ein Verfahren zum Zerlegen des unteren Kerngerüsts eines Kernreaktors, bei dem das Kerngerüst in eine Zwischenstellung angehoben wird, während das Kerngerüst vollständig unterhalb des Wasserspiegels verbleibt.

Der Erfindung liegt daher die Aufgabe zu Grunde, ein Verfahren zum Zerlegen eines in einem Reaktordruckbehälter eines Kernkraftwerkes eingebauten unteren Kerngerüstes anzugeben, bei dem ein mit einer erhöhten Strahlenbelastung des Bedienpersonals einhergehendes Trockenziehen vermieden ist.

Die genannte Aufgabe wird gemäß der Erfindung gelöst mit einem Verfahren mit den Merkmalen des Patentanspruches 1. Gemäß diesen Merkmalen umfasst das Verfahren zum Zerlegen eines in einem Reaktordruckbehälter eines Kernkraftwerkes eingebauten unteren Kerngerüstes, dessen Bauhöhe größer ist als der Abstand zwischen der Oberkante des geöffneten Reaktordruckbehälters und dem Wasserspiegel einer bis zu einer begehbaren Arbeitsebene gefluteten Reaktorgrube, die folgenden Schritte:
a) das Kerngerüst wird in eine Zwischenstellung angehoben, in der es sich vollständig unterhalb des Wasserspiegels befindet und nur mit einem Oberteil die Oberkante des geöffneten Reaktordruckbehälters überragt, wobei vor dem Anheben des Kerngerüstes mit einem Hebewerkzeug
   a1) in das Kerngerüst unterhalb des abzutrennenden Oberteils radiale Durchgangsöffnungen eingebracht werden, durch die Haltebolzen eines in das Kerngerüst eingeführten Haltewerkzeuges hindurch geführt werden, so dass sie über den Außenumfang des Kerngerüstes vorstehen, und
   a2) auf die Oberkante des geöffneten Reaktordruckbehälters eine Stützvorrichtung aufgesetzt wird, die beweglich gelagerte Stützen aufweist, auf die
b) das Kerngerüst nach dem Anheben mit dem in das Haltewerkzeug eingreifende Hebewerkzeug mit den über den Außenumfang des Kerngerüstes vorstehenden Haltebolzen abgesetzt wird,
c) anschließend das Oberteil vom Kerngerüst abgetrennt wird.

Wenn das Oberteil zum Abtrennen vom Kerngerüst sukzessive, d.h. in situ zerlegt wird, entfällt die Notwendigkeit, das Oberteil in eine separate Zerlegestation zu transportieren.

Vorzugsweise werden die Stützen nach Anheben des Kerngerüstes jeweils um eine senkrecht zur Mittelachse des Reaktordruckbehälters verlaufende Achse zur Mittelachse hin geschwenkt.

In einer weiteren bevorzugten Ausgestaltung der Erfindung wird innerhalb des Kerngerüstes vor dem Einbringen der Durchgangsöffnungen eine Grundplatte angeordnet, die Aufnahmen für ein Bohrwerkzeug umfasst.

Die Grundplatte dient insbesondere als Abstützung für die Haltebolzen sowie zugleich als Abschirmung.

Eine Verunreinigung des Beckenwassers während des Zerlegens des Oberteils kann reduziert werden, wenn vor dem Zerlegen des Oberteils ein das Oberteil umgebender Zerlegebehälter zumindest mittelbar auf der Oberkante des geöffneten Reaktordruckbehälters abgestellt wird. Wenn das Unterteil nach Entfernen des Oberteils aus dem Reaktordruckbehälter herausgehoben wird und unter dem Kerngerüst eine sich an der Oberkante des Reaktordruckbehälters abstützende Wanne angeordnet wird, die innenliegende Auflageflächen aufweist, auf die das Unterteil abgesetzt wird, und vor dem Zerlegen des Unterteils ein das Unterteil umgebender Zerlegebehälter zumindest mittelbar auf der Oberkante des geöffneten Reaktordruckbehälters abgestellt wird, kann das Unterteil vor Ort zerlegt werden.

Um das Eindringen von Schneidgut oder Abrasivmittel in den Innenraum des Reaktordruckbehälters zu verhindern, wird dieser gegen den Außenraum abgedichtet.

Wenn gemäß einer weiteren vorteilhaften Ausgestaltung der Erfindung zusätzlich zu der Anbringung von Dichtungen zur Abdichtung des Innenraumes des Reaktordruckbehälters Sperrwasser in den Reaktordruckbehälter eingeleitet wird, ist die Gefahr, dass Schneidgut oder Abrasivmaterial in den Innenraum eindringen können, weiter verringert.

Zur weiteren Erläuterung der Erfindung wird auf das in den Zeichnungen dargestellte Ausführungsbeispiel verwiesen. Es zeigen:
Fig. 1 und 2 den Ausbau eines unteren Kerngerüstes aus einem Reaktordruckbehälter gemäß dem Stand der Technik,
Fig. 3, 5, 7, 9, 11, 13 und 15 die gemäß der vorliegenden Erfindung vorgenommenen Verfahrensschritte jeweils in einer Übersichtsdarstellung,
Fig. 4, 6, 8, 10, 12, 14 bzw. 16 jeweils die in Fig. 3, 5, 7, 9, 11, 13 und 15 dargestellten Verfahrensschritte in einem vergrößerten Ausschnitt.

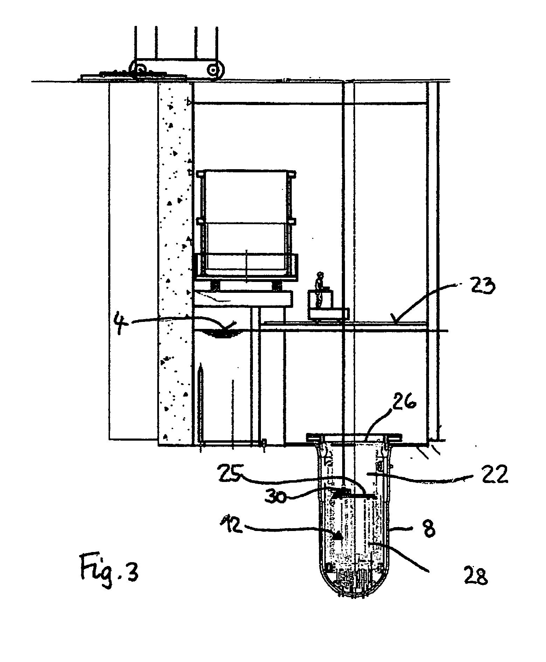

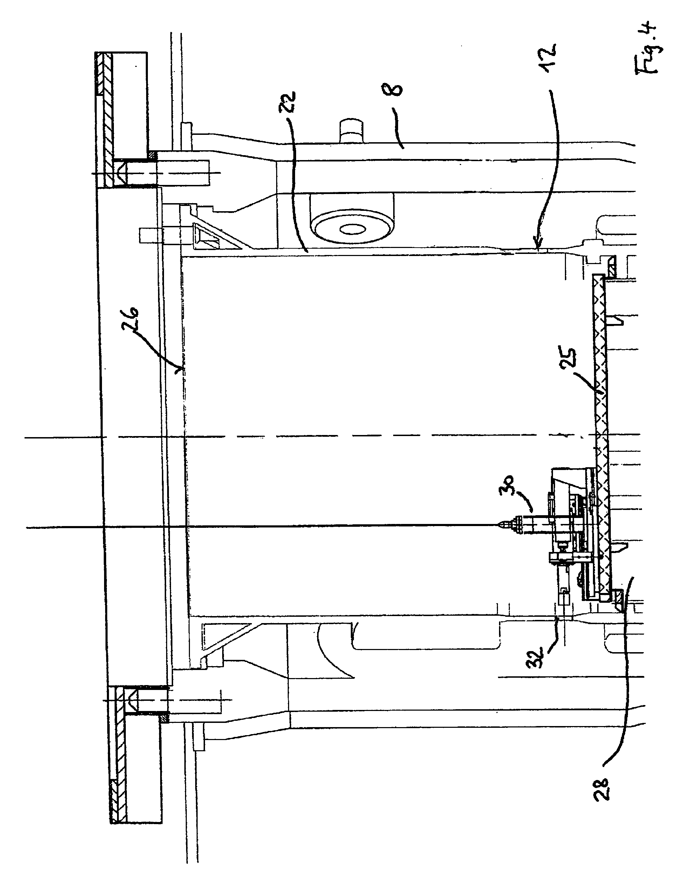

Gemäß Fig. 3 und 4 wird in einem ersten Schritt in das noch im Reaktordruckbehälter 8 befindliche untere Kerngerüst 12 eine vorzugsweise zugleich als Abschirmplatte ausgeführte Grundplatte 25 eingeführt und unterhalb der Oberkante 26 des unteren Kerngerüstes 12 auf einem Unterteil 28, im Beispiel die Oberkante der Kernumfassung, aufgesetzt. Auf die Grundplatte 25 wird ein Bohrwerk 30 aufgesetzt und dort in Aufnahmen radial kraftschlüssig fixiert. Mit dem nacheinander in unterschiedlichen Umfangspositionen abgestellten Bohrwerk 30 werden in das Kerngerüst 12 unterhalb des abzutrennenden Oberteils 22 eine Mehrzahl von radialen Durchgangsöffnungen 32 eingebracht.

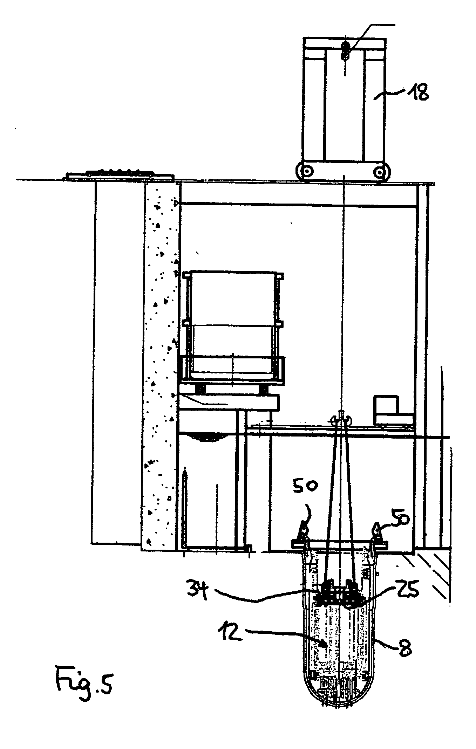

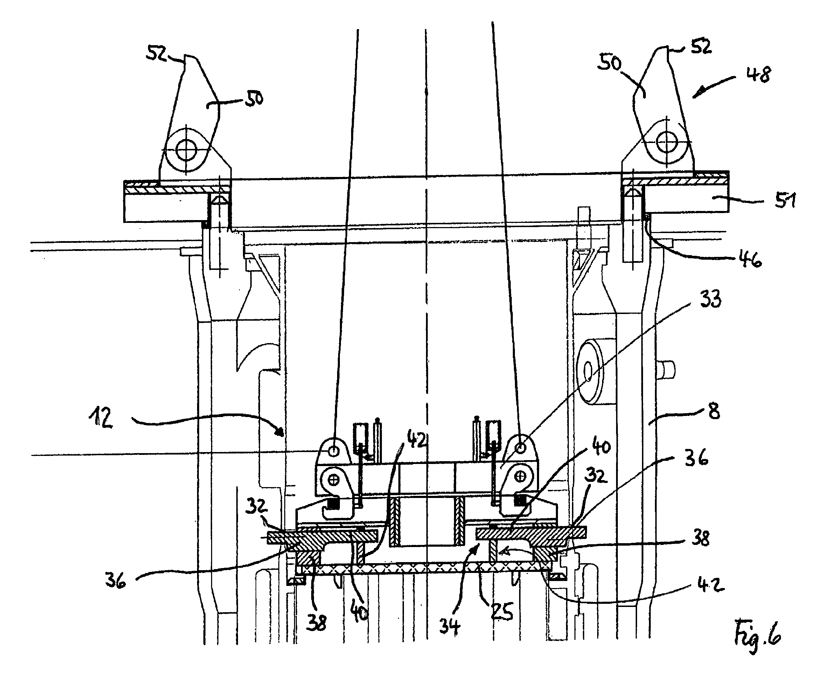

In einem in Fig. 5 und 6 veranschaulichten nächsten Schritt wird nach Entfernen des Bohrwerkes 30 mit Hilfe des Gebäudekrans 18 auf der Grundplatte 25 ein an einem Hebewerkzeug 33 aufgehängtes Haltewerkzeug 34 abgesetzt, das eine der Anzahl der Durchgangsöffnungen 32 entsprechende Anzahl von Haltebolzen 36 umfasst, die radial verschiebbar im Haltewerkzeug 34 gelagert sind und durch die Öffnungen 32 mit Überstand durchgesteckt werden. Die Haltebolzen 36 sind hierzu jeweils in einem am äußeren Rand der Grundplatte 25 aufliegenden Lagerteil 38 radial geführt. Nach Ausfahren der Haltebolzen 36 wird das gesamte untere Kerngerüst 12 mit Hilfe des am Gebäudekran 18 aufgehängten Hebewerkzeuges 33 angehoben. Die Haltebolzen 36 stützen sich dabei zusätzlich mit einem radial sich nach innen erstreckenden Hebelarm 40 über Ständer 42 an der Grundplatte 25 ab, um die beim Anheben des unteren Kerngerüstes 12 auftretenden Biegemomente aufzufangen.

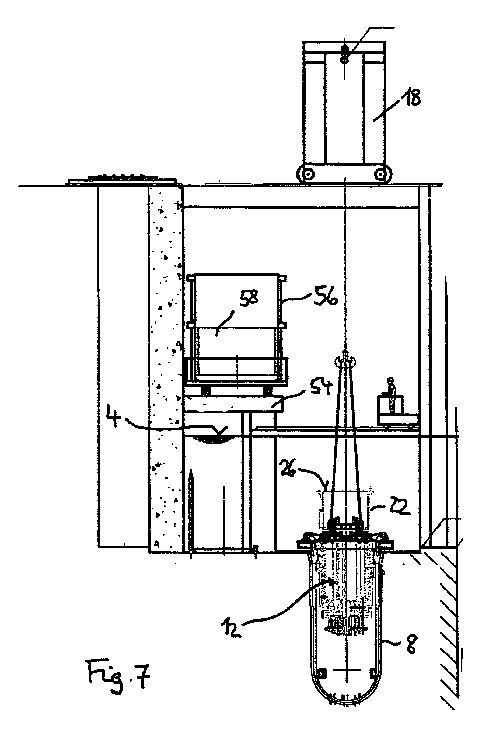

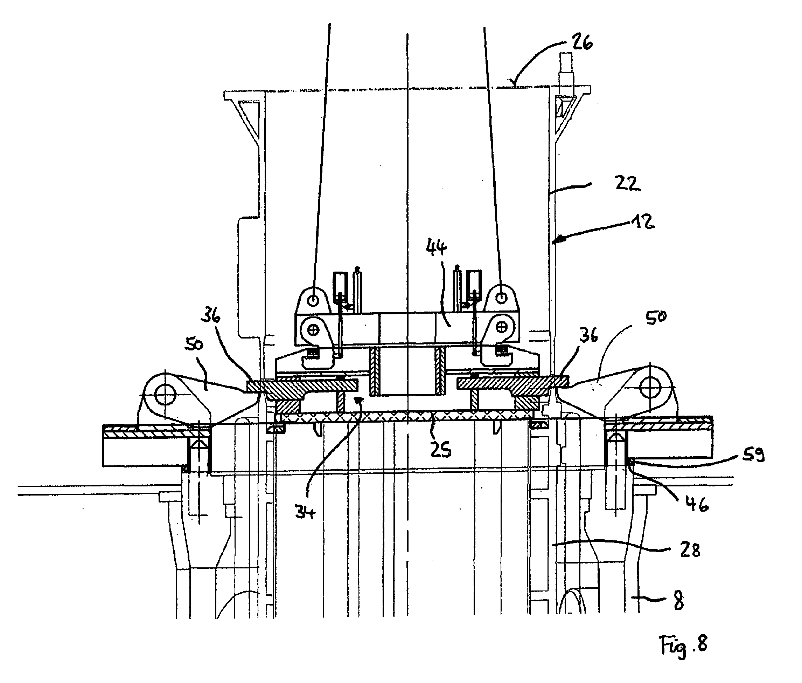

In einem vorherigen Arbeitsschritt ist auf einen die Oberkante des geöffneten Reaktordruckbehälters 8 bildenden Flansch 46 eine Stützvorrichtung 48 aufgesetzt worden, die eine Mehrzahl von Stützen 50 aufweist, die beweglich auf einem auf den Flansch 46 gemäß Fig. 3 und 4 bereits vorab abgesetzten Stützring 51 gelagert sind. Im Beispiel der Fig. 5 und 6 sind die Stützen 50 um eine senkrecht zur Mittelachse des Reaktordruckbehälters 8 verlaufende Achse zur Mittelachse hin schwenkbar angeordnet. Anschließend wird das untere Kerngerüst 12 angehoben, und es werden die Stützen 50 nach innen geschwenkt, so dass beim erneuten Absenken des unteren Kerngerüstes 12 die aus den Durchgangsöffnungen 32 radial hervorstehenden Haltebolzen 36 auf am Freiende der Stützen 50 jeweils befindliche Lagerflächen 52 aufliegen, wie dies in Fig. 7 und 8 näher dargestellt ist. In dieser Zwischenstellung erfolgt dann das nachstehend erläuterte Abtrennen bzw. Zerlegen des Oberteils 22. Der Fig. 7 ist außerdem zu entnehmen, dass sich die Oberkante 26 des unteren Kerngerüstes 12 auch im angehobenen Zustand deutlich unterhalb des Wasserspiegels 4 befindet, so dass stets eine ausreichende Wasserüberdeckung vorhanden ist. Oberhalb des Wasserspiegels 4 ist auf einer Abstellplattform 54 ein Zerlegebehälter 56 mit einem schematisch angedeuteten Ringfahrwerk 58 für einen an dessen Innenumfang umfahrenden Zerlegemanipulator, beispielsweise eine Wasserstrahlschneidvorrichtung, bereitgestellt.

Vor dem Aufsetzen des Stützringes 51 der Stützvorrichtung 48 ist außerdem die Dichtfläche des Flansches 46 zu ihrem Schutz mit einem Dichtelement 59 abgedeckt worden.

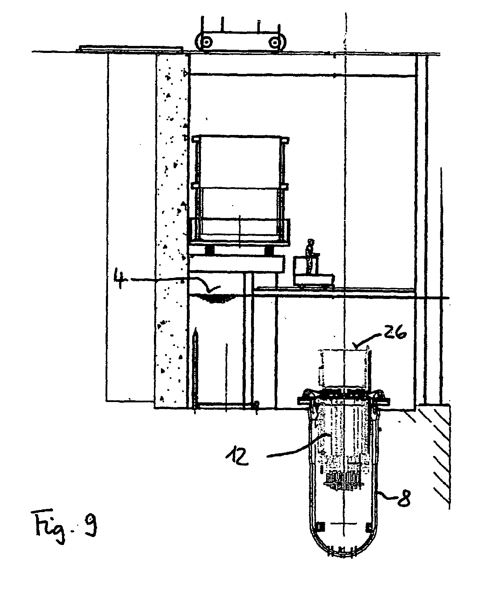

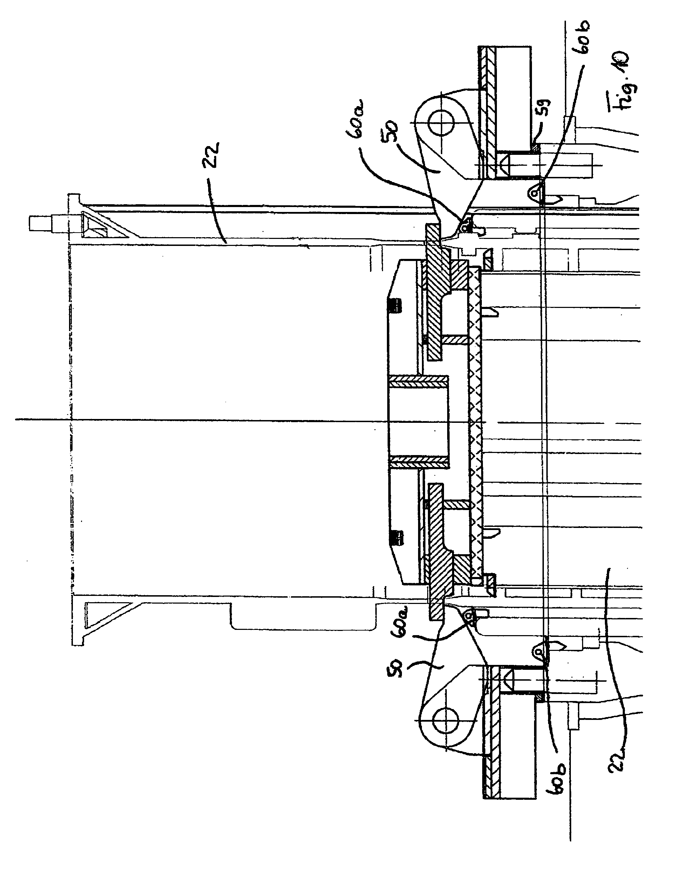

Gemäß Fig. 9 und 10 ist in einem vorhergehenden Arbeitsschritt das zum Anheben des unteren Kerngerüstes 12 benutzte Hebewerkzeug 33 (Fig. 8) abgehoben worden. Der Innenquerschnitt des unteren Kerngerüstes 12 ist komplett durch die Grundplatte 25 abgedeckt. Die Randbereiche des unteren Kerngerüstes 12 sind mit Hilfe einer Gummilippe oder aufblasbaren Dichtung 60a vollständig gegen die darunterliegenden Bereiche des Reaktordruckbehälters 8 abgedichtet. Der äußere Ringbereich des unteren Kerngerüstes 12 ist außerdem mit segmentförmigen, sich überlappenden Dichtleisten 60b gegen ein Ausbreiten von beim Zerlegen freigesetzten Partikeln in das Innere des Reaktordruckbehälters 8 geschützt. Auf diese Weise ist der Innenraum des Reaktordruckbehälters 8 vollständig gegen den Außenraum, in dem die Zerlegearbeiten stattfinden, abgedichtet.

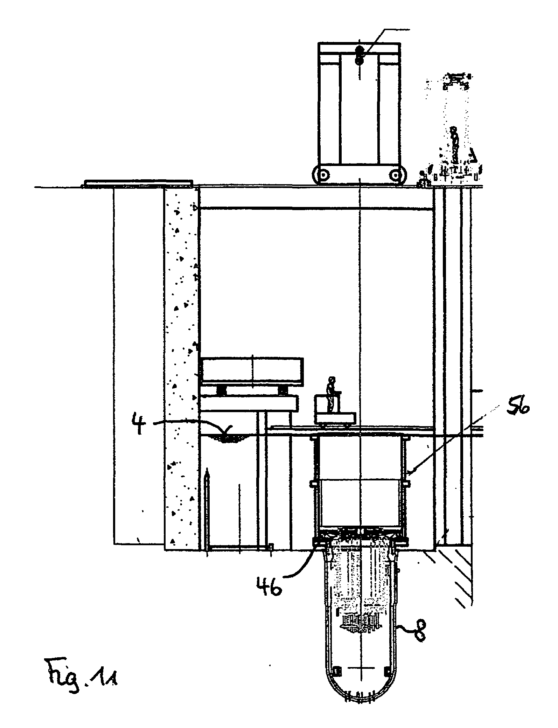

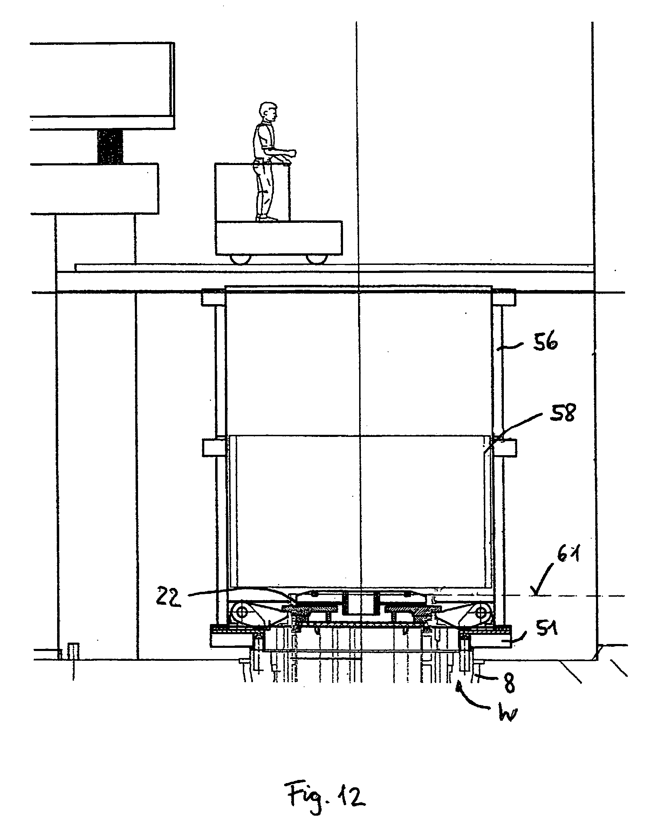

Anschließend wird gemäß Fig. 11 und 12 auf den Stützring 51 und somit mittelbar auf der Oberkante bzw. auf den Flansch 46 des Reaktordruckbehälters 8 der Zerlegebehälter 56 abgesetzt. In diesem Zerlegebehälter 56 wird nun das Oberteil 22 bis zu einer unteren Schnittebene 61 sukzessive zerlegt.

Um das durch gegebenenfalls vorhandene Druckunterschiede, beispielsweise bedingt durch Temperaturschwankungen, verursachte Ausbreiten von beim Zerlegen entstehenden Partikeln nach außen zu verhindern, wird während des Zerlegens unterhalb des abgedichteten Raumes (Dichtung 60a und Dichtleisten 60b, Fig. 10) Sperrwasser W in den Reaktordruckbehälter 8 eingeleitet.

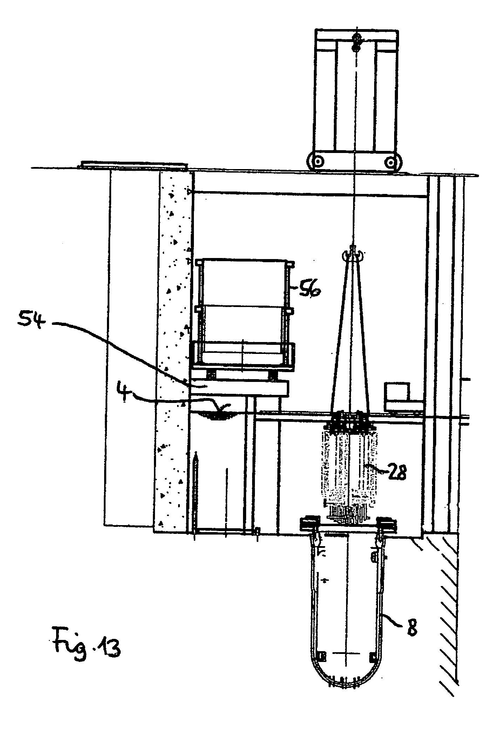

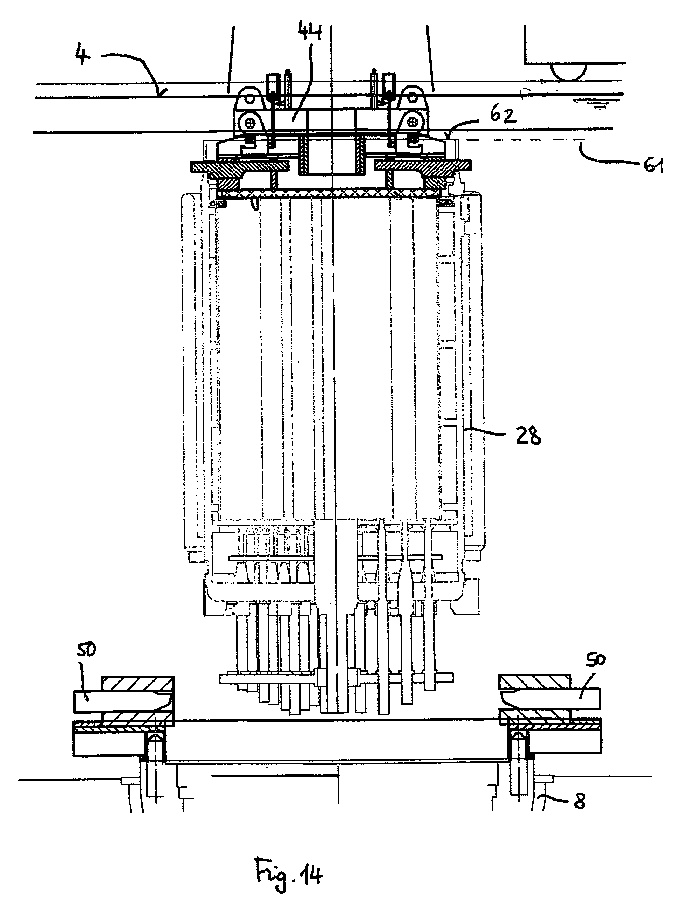

Anschließend wird gem. Fig. 13 und 14 der Zerlegebehälter 56 vom Flansch 46 abgehoben und erneut auf die Abstellplattform 54 abgesetzt. Das Hebewerkzeug 33 wird erneut am Haltewerkzeug 34 angeschlagen und das verbleibende Unterteil 28 wird aus dem Reaktordruckbehälter 8 angehoben, wobei sichergestellt ist, dass sich die Oberkante 62 des verbleibenden Unterteils 28 unterhalb des Wasserspiegels 4 befindet. Da die Grundplatte 25 vorzugsweise als Abschirmplatte ausgeführt ist, ist außerdem sichergestellt, dass die kurzzeitige Verringerung der Wasserüberdeckung aus strahlenschutztechnischen Gründen akzeptiert werden kann.

Zum Anheben des Unterteils 28 aus dem Reaktordruckbehälter 8 sind die Stützen 50 zurückgefahren, wobei im Ausführungsbeispiel gemäß Fig. 14 alternativ zu den vorangegangenen Ausführungsbeispielen radial verschiebbare Stützen 50 vorgesehen sind.

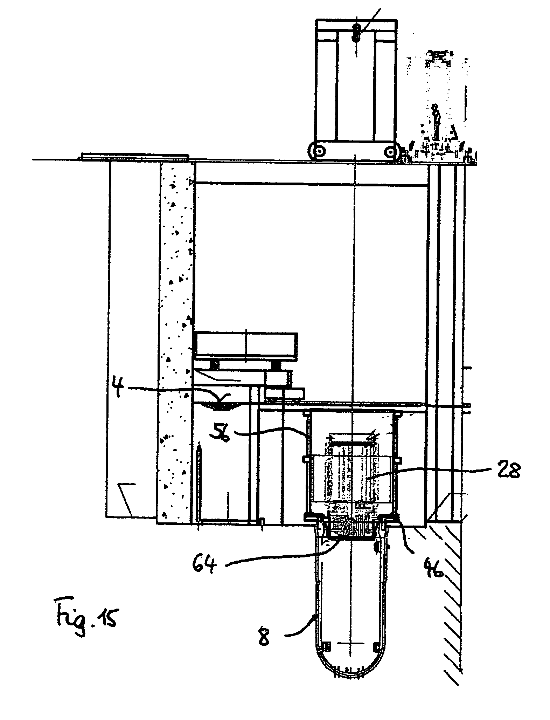

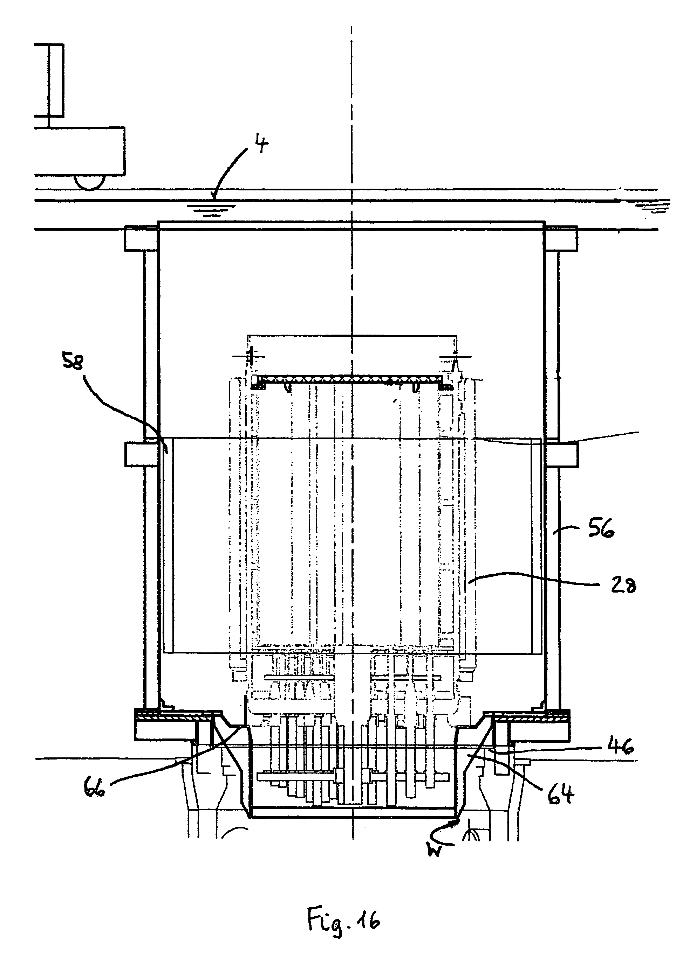

Nach Entfernen der Stützen 50 wird gemäß Fig. 15 und 16 auf der Oberkante bzw. auf den Flansch 46 des Reaktordruckbehälters 8 eine zugleich zur Abdichtung dienende Wanne 64 abgesetzt, die eine innen umlaufende Schulter 66 aufweist, die als Auflagefläche dient, auf die das Unterteil 28 des unteren Kerngerüstes 12 aufgesetzt werden kann, und deren Tiefe eine ausreichende Wasserüberdeckung ermöglicht. Durch die Abstellwanne 64 und den Zerlegebehälter 56 wird die Ausbreitung von bei der Zerlegung entstehenden Fugenmaterial bzw. Abrasivmittel in den Reaktordruckbehälter 8 verhindert. Auch hier wird durch Hinzuführung von Sperrwasser W in den Reaktordruckbehälter 8 die Ausbreitung von bei dem Zerlegen entstehenden Schneidpartikeln oder Abrasivmitteln in den Reaktordruckbehälter 8 verhindert.

Wenn die Dosisleistung des Unterteils 28 des unteren Kerngerüstes 12 ein Zerlegen nach Entfernen der Grundplatte 25 ermöglicht, kann dieses alternativ zu der vorstehend geschilderten Vorgehensweise auch auf einem separaten Abstellplatz vorgenommen werden.

## Patentansprüche

1. Verfahren zum Zerlegen eines in einem Reaktordruckbehälter (8) eines Kernkraftwerkes eingebauten unteren Kerngerüstes (12), dessen Bauhöhe größer ist als der Abstand zwischen der Oberkante des geöffneten Reaktordruckbehälters (8) und dem Wasserspiegel (4) einer bis zu einer begehbaren Arbeitsebene (23) gefluteten Reaktorgrube (2), mit folgenden Schritten:
a) das Kerngerüst (12) wird in eine Zwischenstellung angehoben, in der es sich vollständig unterhalb des Wasserspiegels (4) befindet und nur mit einem Oberteil (22) die Oberkante des geöffneten Reaktordruckbehälters (8) überragt, wobei vor dem Anheben des Kerngerüstes (12) mit einem Hebewerkzeug (33)
a1) in das Kerngerüst (12) unterhalb des abzutrennenden Oberteils (22) radiale Durchgangsöffnungen (32) eingebracht werden, durch die Haltebolzen (36) eines in das Kerngerüst (12) eingeführten Haltewerkzeuges (34) hindurch geführt werden, so dass sie über den Außenumfang des Kerngerüstes (12) vorstehen, und
a2) auf die Oberkante des geöffneten Reaktordruckbehälters (8) eine Stützvorrichtung (48) aufgesetzt wird, die beweglich gelagerte Stützen (50) aufweist, auf die
b) das Kerngerüst (12) nach dem Anheben mit dem in das Haltewerkzeug (34) eingreifenden Hebewerkzeug (33) mit den über den Außenumfang des Kerngerüstes (12) vorstehenden Haltebolzen (36) abgesetzt wird, und
c) anschließend das Oberteil (22) vom Kerngerüst (12) abgetrennt wird.

2. Verfahren nach Anspruch 1, bei der das Oberteil (22) zum Abtrennen vom Kerngerüst (12) sukzessive zerlegt wird.

3. Verfahren nach Anspruch 1 oder 2, bei dem die Stützen (50) nach Anheben des Kerngerüstes (12) jeweils um eine senkrecht zur Mittelachse des Reaktordruckbehälters (8) verlaufende Achse zur Mittelachse hin geschwenkt werden.

4. Verfahren nach einem der Ansprüche 1 bis 3, bei dem innerhalb des Kerngerüstes (12) vor dem Einbringen der Durchgangsöffnungen (32) eine Grundplatte (25) angeordnet wird, die Aufnahmen für ein Bohrwerk (30) umfasst.

5. Verfahren nach Anspruch 4, bei dem sich die Haltebolzen (36) an der Grundplatte (25) abstützen.

6. Verfahren nach Anspruch 4 oder 5, bei dem die Grundplatte (25) zugleich als Abschirmung dient.

7. Verfahren nach einem der vorhergehenden Ansprüche, bei dem vor dem Zerlegen des Oberteils (22) ein das Oberteil (22) umgebender Zerlegebehälter (56) zumindest mittelbar auf der Oberkante des geöffneten Reaktordruckbehälters (8) abgestellt wird.

8. Verfahren nach einem der vorhergehenden Ansprüche, bei dem ein nach Entfernen des Oberteils (22) verbleibendes Unterteil (28) aus dem Reaktordruckbehälter (8) herausgehoben wird und unter dem Kerngerüst (12) eine sich an der Oberkante des Reaktordruckbehälters (8) abstützende Wanne (64) angeordnet wird, das eine oder mehrere innenliegende Auflageflächen aufweist, auf die das Unterteil (28) abgesetzt wird.

9. Verfahren nach Anspruch 8, bei dem vor dem Zerlegen des Unterteils (28) ein das Unterteil (28) umgebender Zerlegebehälter (56) auf der Oberkante des geöffneten Reaktordruckbehälters (8) abgestellt wird.

10. Verfahren nach einem der vorhergehenden Ansprüche, bei dem der Innenraum des Reaktordruckbehälters (8) gegen den Außenraum abgedichtet wird.

11. Verfahren nach Anspruch 10, bei dem in den Innenraum des Reaktordruckbehälters (8) Sperrwasser (W) eingeleitet wird.

## Claims

1. Method for dismantling a lower core support structure (12) installed in a reactor pressure vessel (8) of a nuclear power plant, whose total height is greater than the distance between the upper edge of the open reactor pressure vessel (8) and the water surface (4) of a reactor cavity (2) driven to an accessible working level (23), having the following steps:
a) the core support structure (12) is lifted to an intermediate position, in which it is located completely underneath the water surface (4) and only protrudes above the upper edge of the open reactor pressure vessel (8) with one upper section (22), wherein, before lifting the core support structure (12) using a lifting tool (33),
a1) radial through-holes (32) are inserted into the core support structure (12) beneath the upper sections (22) which are to be removed, are guided through the holding bolts (36) of a holding tool (34) inserted into the core support structure (12), so that they protrude above the external circumference of the core support structure (12), and
a2) a support device (48) is fitted onto the upper edge of the open reactor pressure vessel (8), which has moveably mounted supports (50), and
b) after having been lifted by the lifting tool (33) engaged with the holding tool (34), the core support structure (12) is lowered using the holding bolts (36) protruding above the external circumference of the core support structure (12), and
c) finally, the upper section (22) of the core support structure (12) is removed.

2. Method according to claim 1, wherein the upper section (22) is dismantled successively for separation from the core support structure (12).

3. Method according to claim 1 or 2, wherein, after lifting the core support structure (12), the supports (50) are each rotated around an axis to the middle axis which runs perpendicular to the middle axis of the reactor pressure vessel (8).

4. Method according to one of claims 1 to 3, wherein a base plate (25) is arranged within the core support structure (12) before inserting the through-holes (32), which comprises holding fixtures for a boring machine (30).

5. Method according to claim 4, wherein the holding bolts (36) are shored to the base plate (25).

6. Method according to claim 4 or 5, wherein the base plate (25) serves as a screen at the same time.

7. Method according to one of the preceding claims, wherein, before dismantling the upper section (22), a dismantling vessel (56) enclosing the upper section (22) is at least indirectly in contact with the upper edge of the open reactor pressure vessel (8).

8. Method according to one of the preceding claims, wherein a remaining lower section (28) is lifted out of the reactor pressure vessel (8) after the upper section (22) has been removed, and a shoring tank (64) is arranged on the upper edge of the reactor pressure vessel (8) under the core support structure (12), which has one or more internal support surfaces, onto which the lower section (28) is lowered.

9. Method according to claim 8, wherein, before dismantling the lower section (28), a dismantling vessel (56) enclosing the lower section (28) is at least indirectly in contact with the upper edge of the open reactor pressure vessel (8).

10. Method according to one of the preceding claims, wherein the inner space of the reactor pressure vessel (8) is sealed off from the outer space.

11. Method according to claim 10, wherein sealing water (W) is introduced into the inner space of the reactor pressure vessel (8).

## Revendications

1. Procédé de désassemblage d'une structure de support de coeur (12) inférieure disposée dans une cuve de réacteur sous pression (8) d'une centrale nucléaire, dont la hauteur de construction est plus grande que l'espacement entre le bord supérieur de la cuve de réacteur sous pression (8) ouverte et la surface d'eau (4) d'une fosse du réacteur (2) inondée jusqu'à une plateforme de travail (23) accessible, comportant les étapes suivantes :
a) la structure de support du coeur (12) est soulevée dans une position intermédiaire, dans laquelle elle se trouve complètement au-dessous de la surface de l'eau (4) et dépasse seulement par une partie supérieure (22) le bord supérieur de la cuve du réacteur sous pression (8) ouverte, dans lequel avant le levage de la structure de support de coeur (12) avec un appareil de levage (33)
a1) dans la structure de support de coeur (12) en dessous de la partie supérieure (22) à séparer, des ouvertures traversantes radiales (32) sont ménagées, à travers lesquelles des goujons de retenue (36) d'un appareil de retenue (34) inséré dans la structure de support de coeur (12) sont guidées, de telle sorte qu'ils saillent par-dessus la circonférence extérieure de la structure de support de coeur (12) et
a2) sur le bord supérieur de la cuve sous de réacteur sous pression (8) ouverte, un dispositif d'appui (48) est posé, qui présente des étais (50) positionnés de manière mobile, sur lequel
b) la structure de support de coeur (12) est posée après le levage avec l'appareil de levage (33) s'engrenant dans l'appareil de retenue (34) avec les goujons de retenue (36) saillant par-dessus la circonférence extérieure de la structure de support du coeur de réacteur (12), et
c) la partie supérieure (22) est ensuite séparée de la structure de support du coeur (12).

2. Procédé selon la revendication 1, dans lequel la partie supérieure (22) est désassemblée successivement pour la séparer de la structure de support de coeur (12).

3. Procédé selon les revendications 1 ou 2, dans lequel les étais (50) après le levage de la structure de support de noyau de réacteur (12) sont pivotés respectivement par rapport à l'axe central autour d'un axe s'étendant perpendiculairement à l'axe central de la cuve de réacteur sous pression (8).

4. Procédé selon une des revendications 1 à 3, dans lequel à l'intérieur de la structure de support de coeur de réacteur (12) avant la réalisation des ouvertures traversantes (32) une plaque de base (25) est disposée, qui comprend des réceptacles pour une aléseuse (30).

5. Procédé selon la revendication 4, dans lequel les goujons de retenue (36) s'appuient sur la plaque de base (25).

6. Procédé selon les revendications 4 ou 5, dans lequel la plaque de base (25) sert simultanément de blindage.

7. Procédé selon une des revendications précédentes, dans lequel avant le désassemblage de la partie supérieure (22) un conteneur de désassemblage (56) entourant la partie supérieure (22) est remisé au moins indirectement sur le bord supérieur de la cuve de réacteur sous pression (8) ouverte.

8. Procédé selon une des revendications précédentes, dans lequel une partie inférieure (28) restant après le retrait de la partie supérieure (22) est glissée hors de la cuve de réacteur sous pression (8) et sous la structure de support de coeur (12) un bac (64) s'appuyant sur le bord supérieur de la cuve de réacteur sous pression (8) est disposé, lequel présente une ou plusieurs surfaces de support situées à l'intérieur, sur lesquelles la partie inférieure (28) est posée.

9. Procédé selon la revendication 8, dans lequel avant le désassemblage de la partie inférieure (28) un conteneur de désassemblage (56) entourant la partie inférieure (28) est posé sur le bord supérieur de la cuve de réacteur sous pression (8) ouverte.

10. Procédé selon une des revendications précédentes, dans lequel l'espace intérieur de la cuve de réacteur sous pression (8) est étanchéifié contre l'espace extérieur.

11. Procédé selon la revendication 10, dans lequel de l'eau d'intercepteur hydraulique (W) est introduite dans l'espace intérieur de la cuve de réacteur sous pression (8).
